# EUROPÄISCHE PATENTSCHRIFT

(11) **EP 3 199 857 B1**
(45) Veröffentlichungstag und Bekanntmachung des Hinweises auf die Patenterteilung: **22.11.2023**
(21) Anmeldenummer: 17152754.2
(22) Anmeldetag: 24.01.2017
(51) Int. Cl.: F16M 11/04, A47F 7/024, E05B 73/00, F16M 11/10, F16M 11/20

(54) **TABLET-HALTER ZUR HALTERUNG EINES MOBILEN ENDGERÄTS**
TABLET HOLDER FOR HOLDING A MOBILE TERMINAL
SUPPORT DE PLATEAU DESTINÉ À SUPPORTER UN TERMINAL MOBILE

(30) Priorität: 26.01.2016 DE 102016101331
(43) Veröffentlichungstag der Anmeldung: 02.08.2017
(73) Patentinhaber: "DURABLE" HUNKE & JOCHHEIM GMBH & CO. KOMMANDITGESELLSCHAFT, 58636 Iserlohn (DE)
(72) Erfinder: Maier-Hunke, Horst-Werner, 58640 Iserlohn (DE)
(74) Vertreter: Beckord & Niedlich Patentanwälte PartG mbB

(56) Entgegenhaltungen:
- EP-A1- 2 843 288
- EP-A2- 2 628 991
- US-A1- 2013 206 942
- US-A1- 2014 263 931
- US-A1- 2015 196 140

## Beschreibung

Die Erfindung betrifft einen Tablet-Halter zur Halterung eines mobilen Endgeräts mit einer Klemmeinrichtung mit zwei an einem Führungsschlitten in einer Längsrichtung gegeneinander verschiebbar gelagerten Backen zum Festklemmen des mobilen Endgeräts, wobei die Backen über einen Bewegungsmechanismus so miteinander gekoppelt sind, dass bei einer Bewegung einer der Backen relativ zum Führungsschlitten die gegenüberliegende Backe synchron relativ zum Führungsschlitten mitbewegt wird. Unter einem mobilen Endgerät im Sinne dieser Erfindung ist dabei insbesondere ein flächiges bzw. flaches Kommunikationsendgerät mit einem Display auf einer Flachseite zu verstehen, beispielsweise ein Tablet-PC (kurz Tablet genannt), ein Smartphone, ein eBook-Reader oder Ähnliches. Halter der eingangs genannten Art zum Halten von Tablets, Smartphones, eBook-Reader oder dergleichen werden inzwischen im Markt auch als "Tablet-Halter" bezeichnet. Daher wird im Folgenden auch dieser Begriff übernommen, wobei der Begriff "Tablet-Halter" im Rahmen der Erfindung nicht einschränkend zu verstehen ist, sondern als ein Halter, der neben den Tablets auch andere mobile Endgeräte, insbesondere Smartphones und eBook-Reader, halten kann. Beispiele finden sich in der EP 2 628 991 A2, US 2014/263931 A1, US 2013/206942 A1 und EP 2 843 288 A1.

Normalerweise trägt der Benutzer derartige Geräte mit sich. In vielen Situationen besteht aber auch der Bedarf, das Gerät bequem bedienen zu können und in einer Stellung zu positionieren, dass der Bildschirm für mehrere Personen bequem einsehbar ist, ohne das Gerät selber halten zu müssen. Hierzu müssen die Geräte so in einer Halterung gehalten werden, dass die eine Flachseite, nämlich die Anzeigefläche mit dem Touchdisplay, möglichst unbehindert zugänglich ist. Typische Einsatzorte für derartige Tablet-Halter sind beispielsweise in Fahrzeugen, an Präsentationständen wie beispielsweise in Museen, in Messen oder Verkaufsausstellungen bzw. Läden, in denen die mobilen Endgeräte präsentiert werden sollen, aber auch an Schreibtischen.

Insbesondere in Präsentations- und Verkaufsräumen besteht zudem eine hohe Gefahr, dass die mobilen Endgeräte unbefugt entwendet werden. Um dies zu verhindern, ist es möglich, das Gerät mit zusätzlich daran befestigten Elementen zu sichern, z. B. mit an der Rückseite des Gerätes fest aufgeklebten Ösen, die wiederum über ein Sicherheitsdrahtseil mit dem Halter gekoppelt sind. Solche Sperren erfordern aber eine Veränderung bzw. einen Eingriff am Gehäuse des mobilen Endgeräts. Zudem wäre es wünschenswert, wenn die Sicherung des Gerätes möglichst unauffällig erfolgen könnte.

Ein Halter der eingangs genannten für Mobiltelefone wurde bereits in dem deutschem Gebrauchsmuster 92 16 190 U1 beschrieben. Hier sind zwei Backen über zahnstangenähnliche Elemente und ein gemeinsames Zahnrad miteinander gekoppelt. Mithilfe von Federn werden die beiden Klauen normalerweise auseinander gedrückt, sofern der Bewegungsmechanismus nicht durch eine Sperre entgegen diesem Auseinanderdrücken der Klauen blockiert wird. Diese Sperre ist von außen sehr einfach durch einen Knopf lösbar, sodass die Backen dann auseinander bewegt werden. Bei eingerasteter Sperre lassen sich die Backen dann nur noch in die Klemmrichtung zusammenschieben und so mit einer Hand das Mobiltelefon festklemmen. Zum Entnehmen des Mobiltelefons muss wieder der Knopf der Verriegelung gelöst werden. Dieser Mechanismus lässt zwar eine Ein-Hand-Bedienung der Halterung für das Mobiltelefon zu, bietet aber keine Diebstahlsicherung.

Es ist eine Aufgabe der vorliegenden Erfindung, einen Halter der eingangs genannten Art mit einer alternativen Sicherung bzw. zumindest sehr effektiven Hemmung gegen unbefugte Entnahme des mobilen Endgerätes aus dem Halter zur Verfügung zu stellen.

Diese Aufgabe wird durch einen Halter gemäß Patentanspruch 1 gelöst.

Der erfindungsgemäße Halter zur Halterung eines mobilen Endgerätes, insbesondere eines Tablet-PCs und/oder Smartphones, weist wie eingangs beschrieben eine Klemmeinrichtung mit zwei an einem Führungsschlitten in einer Längsrichtung, d. h. in einer Öffnungs-/Verschlussrichtung, gegeneinander - d. h. aufeinander zu und voneinander weg - verschiebbar gelagerten Backen auf. Der Führungsschlitten kann beispielsweise als eine Art Gestell oder Gehäuse mit Führungen für die Backen aufgebaut sein. Er kann an einem beliebigen Grundelement bzw. einer Basis, beispielsweise einem Ständer, Arm oder dergleichen, vorzugsweise beweglich, befestigt sein. Die Backen dienen zum Festklemmen des mobilen Endgerätes. Über einen Mechanismus, welcher beispielsweise, wie nachfolgend noch genauer beschrieben, in einem Hohlraum des Führungsschlittens untergebracht sein kann, sind diese Backen so miteinander gekoppelt, dass bei einer Bewegung einer der Backen relativ zum Führungsschlitten die gegenüberliegende Backe synchron relativ zum Führungsschlitten mitbewegt wird. Das heißt, wenn eine Backe zur Mitte des Führungsschlittens hin bewegt wird, tut dies automatisch auch die andere Backe, da sich die Backen aufeinander zu bewegen und umgekehrt auseinander bewegen, wenn eine der Backen nach außen gezogen wird. Die Backen vollführen also relativ zueinander eine gegenläufig synchrone Bewegung.

Diese Klemmeinrichtung weist erfindungsgemäß eine Schließeinrichtung mit zumindest folgenden Elementen auf:
- ein verstellbares Blockierelement, welches in einer Blockierstellung den Bewegungsmechanismus blockiert und
- ein Schließmechanismus mit einer Schließwerkzeugaufnahme, um das Blockierelement mittels eines in der Schließwerkzeugaufnahme aufgenommenen Schließwerkzeugs aus der oder in die Blockierstellung zu bewegen.

Das Schließwerkzeug muss dementsprechend an die Schließwerkzeugaufnahme angepasst sein bzw. umgekehrt. Beispiele für solche Schließwerkzeuge und Schließwerkzeugaufnahmen sind entsprechend ein Schlüssel als Schließwerkzeug und ein entsprechendes Schloss als Schließwerkzeugaufnahme oder in einfachen Fällen als Schließwerkzeug ein Inbus^{®}-Schlüssel, ein Dreikantschlüssel, ein Torx^{®}-Schlüssel bzw. im allereinfachsten Fall ein Schraubendreher mit einem bestimmten Profil an der Spitze. Vorzugsweise werden aber etwas kompliziertere Formen verwendet, wie beispielsweise zumindest ein Inbus^{®}-Schlüssel oder ein Torx^{®}-Schlüssel. Die Schließwerkzeugaufnahme ist dann entsprechend geformt. Mithilfe dieses Schließwerkzeugs lässt sich nun das Blockierelement aus der Blockierstellung bewegen, um den Bewegungsmechanismus wieder aufzuschließen, sodass die Backen relativ zum Führungsschlitten bewegt werden können und dementsprechend ein im Tablet-Halter gehaltenes Endgerät entnommen werden kann. Es ist klar, dass mit einem solchen Schließwerkzeug auch das Blockierelement wieder in die Blockierstellung bewegt werden kann, wenn es sich in der Öffnungsstellung befindet, in der der Bewegungsmechanismus nicht blockiert ist. Da das Schließwerkzeug separat vom Halter ist, d. h. nicht an diesen angebaut, sondern abnehmbar und mitnehmbar wie ein Schlüssel ist, kann der Besitzer des Tablet-Halters bzw. des mobilen Endgerätes dieses Schließwerkzeug in Verwahrung nehmen.

Anders als bei den bisherigen Sicherungen ist also die Schließwerkzeugaufnahme für ein spezielles Schließwerkzeug als Teil der Schließeinrichtung in den Tablet-Halter integriert, sodass der Bewegungsmechanismus sicher blockiert werden kann und ohne das passende Schließwerkzeug unter normalen Umständen keine freie Bewegbarkeit mehr möglich ist. Auf externe zusätzliche Sicherungen, insbesondere Sicherungen, die von außen sofort erkennbar und somit, wie bei Sicherungen in Form von Kabeln oder Ketten, von einem potentiellen Dieb einfacher zerstörbar sind, kann daher verzichtet werden.

Weitere besonders vorteilhafte Ausgestaltungen und Weiterbildungen der Erfindung ergeben sich aus den abhängigen Ansprüchen sowie der nachfolgenden Beschreibung, wobei Merkmale verschiedener Ausführungsbeispiele zu neuen Ausführungsbeispielen kombiniert werden können.

Für die konkrete Ausgestaltung der Schließeinrichtung gibt es verschiedene Möglichkeiten.

Bei einer bevorzugten Variante ist die Schließeinrichtung so ausgebildet, dass das Blockierelement in der Blockierstellung in zumindest ein bewegliches Element des Bewegungsmechanismus formschlüssig eingreift und dieses so blockiert. Alternativ wäre es auch möglich, dass das Blockierelement nicht formschlüssig eingreift, sondern nur klemmend gegen dieses gedrückt wird, ohne dass ein Formschluss erfolgt, d. h. hier erfolgt die Blockade dann im Wesentlichen durch Reibschluss. Sofern der Bewegungsmechanismus beispielsweise zumindest ein Verzahnungselement umfasst, ist die Schließeinrichtung vorzugsweise so ausgebildet, dass das Blockierelement in der Blockierstellung in das Verzahnungselement, d. h. in dessen Verzahnung bzw. Zähne, eingreift.

Der Bewegungsmechanismus kann beispielsweise - wie eingangs erläutert - als Verzahnungselemente zumindest gegenläufige Zahnstangenelemente, also Zahnstangen bzw. Stangen mit zumindest einer gezahnten Kante, aufweisen, die jeweils einer der Backen zugeordnet sind, d. h. mit dieser gekoppelt oder in das Backenteil integriert sind. Als ein weiteres Verzahnungselement kann der Bewegungsmechanismus dann zumindest ein geeignetes Zahnrad aufweisen, über welches diese Zahnstangenelemente miteinander gekoppelt sind. Bei einem solchen Bewegungsmechanismus kann die Schließeinrichtung bevorzugt so ausgebildet sein, dass das Blockierelement in der Blockierstellung in das Zahnrad und/oder eines der Zahnstangenelemente bzw. dessen Zähne eingreift.

Der Bewegungmechanismus kann vorzugsweise auch zumindest ein Rückstellelement wie eine Feder etc. aufweisen. Dieses drückt die Backen bevorzugt in eine Schließstellung, d.h. die Backen werden durch das Rückstellelement aufeinander zu bewegt. Vorzugsweise wird eine Druckfeder eingesetzt, da diese besonders geräuscharm bzw. geräuschlos arbeitet. Es können auch mehrere solcher Rückstellelemente parallel eingesetzt werden.

Bevorzugt umfasst das Blockierelement zumindest einen Zahn zum Eingriff in eine Verzahnung des Verzahnungselements, welches eine bezüglich einer Bewegungsrichtung des Blockierelements derart angeschrägte Andruckfläche aufweist, dass diese bei einem Bewegen des Blockierelements entlang der Bewegungsrichtung in die Blockierstellung das Verzahnungselement in eine Richtung drückt, sodass die Backen aufeinander zu bewegt werden. D. h. beim Einrasten eines solchen Zahns des Blockierelements in die Verzahnung des Verzahnungselements wird automatisch dafür gesorgt, dass die Backen weiter in Klemmrichtung gedrückt werden.

Das Blockierelement kann vorteilhaft in einer Blockierelementführung, welche z. B. besonders bevorzugt in bzw. an dem Führungsschlitten angeordnet sein kann, beweglich gelagert, vorzugsweise linear verschiebbar sein. Ganz besonders bevorzugt ist dabei das Blockierelement linear parallel zur Längsrichtung des Führungsschlittens, d. h. auch parallel zur Bewegungsrichtung der Backen, verschiebbar gelagert.

Der Schließmechanismus weist vorzugsweise ein Getriebe zur Kopplung des Blockierelements mit der Schließwerkzeugaufnahme auf, um das Blockierelement aus der oder in die Blockierstellung zu bewegen, wenn ein in der Schließwerkzeugaufnahme aufgenommenes Schließwerkzeug um eine Rotationsachse (im Folgenden auch "Schlüsselrotationsachse" genannt) gedreht wird. Da bei einem solchen Getriebe eine Umwandlung der Bewegungsart von einer Rotation des Schließwerkzeugs um die Schlüsselrotationsachse in eine Linearbewegung des Blockierelements durchgeführt wird, besteht ein geringeres Risiko, dass sich der Schließmechanismus ohne Schließwerkzeug lösen kann, indem einfach Druck nach außen auf die Backen ausgeübt wird. Eine bevorzugte, weil besonders einfache Ausgestaltung eines solchen Getriebes ist ein Schraubgetriebe.

Bevorzugt weist der Schließmechanismus eine mit dem Blockierelement gekoppelte Treibstange auf, welche mittels des Schließwerkzeugs so verstellbar ist, dass das Blockierelement aus der oder in die Blockierstellung bewegt wird. In einer besonders einfachen und somit bevorzugten Variante weist diese Treibstange an einem stirnseitigen Ende die Schließwerkzeugaufnahme auf, d. h. sie ist stirnseitig an einem freien, vom Blockierelement weg weisenden Ende beispielsweise mit einer Inbus^{®}- oder Torx^{®}-Schlüsselaufnahme oder dergleichen ausgestattet. Zur Realisierung eines Schraubgewindes kann eine solche Treibstange vorzugsweise als Gewindespindel mit zumindest einem Gewindeabschnitt ausgebildet sein, mit welchem sie in einer Spindelmutter gelagert ist. Die Spindelmutter kann beispielsweise im Führungsschlitten gelagert sein. Anstelle eines Gewindeabschnitts kann die Treibstange auch komplett als Gewindestange ausgebildet sein.

Der Schließmechanismus ist bevorzugt so aufgebaut, dass die Schließwerkzeugaufnahme selber auch im Inneren eines Gehäuses des Tablet-Halters, vorzugsweise in einem Gehäuse des Führungsschlittens, angeordnet ist. Durch einen zur Außenseite des Gehäuses führenden Kanal ist die Schließwerkzeugaufnahme erst zugänglich. Somit ist die Schließwerkzeugaufnahme von außen selbst nicht sichtbar und ein potentieller Dieb, welcher den kompletten Mechanismus nicht kennt, kann auch durch Inaugenscheinnahme nicht erkennen, mit welchem Werkzeug er den Mechanismus öffnen könnte. Hierzu wäre eine intensivere Untersuchung des Tablet-Halters erforderlich, was aber in den Präsentationsräumen normalerweise auffallen würde. Besonders bevorzugt ist dabei das Gehäuse so ausgebildet, dass der Kanal außen auch verschließbar oder abdeckbar ist, sodass die Schließwerkzeugaufnahme auch durch den Kanal hindurch nicht sichtbar wäre.

Die Backen können als einfache Klemmbacken ausgebildet sein, die z. B. flache Andruckflächen aufweisen, die seitlich am Rand gegen das Endgerät drücken.

Um das Endgerät aber möglichst sicher zwischen den Backen zu halten und ein Heraushebeln zwischen den geschlossenen Backen, welche sich aufgrund des verbesserten Schließmechanismus ja nicht öffnen lassen, zu vermeiden, weisen die Backen vorzugsweise Krallen auf, die ein zu haltendes mobiles Endgerät an zwei einander gegenüberliegenden Kanten umgreifen. Dabei kann an einer Backe nur eine Kralle vorhanden sein, aber bevorzugt auch mehrere - z. B. zwei - parallel zueinander angeordnete Krallen, die auch untereinander über Stege oder dergleichen gekoppelt sein können. Dabei kann zwischen den Krallen ein Freiraum zur Durchführung eines Kabels für das Endgerät verbleiben.

Die Krallen sind bevorzugt so ausgebildet, dass ein Krallenüberstand, d. h. die Länge eines Teils der Kralle, mit dem diese auf der Vorderseite das zu haltende Tablet übergreifen kann, mindestens 5 mm, weiter bevorzugt mindestens 6 mm, beträgt.

Vorzugsweise ist an dem Tablet-Halter zumindest eine Auflagefläche, an welcher ein zu haltendes mobiles Endgerät mit seiner mit seiner vom Display abgewandten Rückseite anliegt, und/oder zumindest eine Innenseiten der Krallen mit einer rutschhemmenden Oberfläche versehen. Dadurch kann auch ein seitliches Herausziehen des mobilen Endgeräts aus den Backen, insbesondere, wenn diese Krallen aufweisen, vermieden oder zumindest sehr stark gehemmt werden. Diese Ausgestaltung ist daher auch ohne die spezielle Schließeinrichtung vorteilhaft, ergänzt diese aber sinnvoll.

Insbesondere bevorzugt kann die Innenseite der Krallen jeweils mit einer gummielastischen Oberfläche versehen sein. Unter einer gummielastischen Oberfläche ist dabei eine Oberfläche bzw. ein Oberflächenteil aus einem Teil wie ein Elastomer, Gummi, Kautschuk, Silikonkautschuk oder ähnlichem Material zu verstehen, welches ein Verschieben einer glatten Oberfläche gegenüber diesem Material stark erschwert oder sogar verhindert. Besonders bevorzugt wird hierfür ein thermoplastisches Elastomer (TPE) eingesetzt.

Die rutschhemmenden, insbesondere gummielastischen, Oberflächen können dabei besonders bevorzugt in Form von Kralleneinlagen realisiert werden, die z. B. innerhalb der Krallen eingeklipst sein können oder in sonstiger Weise in den Krallen befestigt sind. Vorzugweise sind diese Kralleneinlagen auch bei unbenutztem Zustand des Tablet-Halters aus den Krallen entfernbar, beispielsweise rausklipsbar, um sie bei Gelegenheit auszutauschen. Dies kann zum einen erforderlich sein, um sie nach einer längeren Benutzung gegen neue zu wechseln, oder aber auch, um unterschiedliche Kralleneinlagen für unterschiedliche zu haltende mobile Endgeräte verwenden zu können, sodass die Kralleneinlagen an die Kantenform der jeweiligen Endgeräte besser angepasst sind. Alternativ können die Krallen innenseitig rutschhemmend beschichtet sein.

Zusätzlich zu den Krallen oder alternativ können die Backen jeweils eine Auflagefläche aufweisen, an welcher ein zu haltendes mobiles Endgerät mit seiner Rückseite anliegt, wobei diese Auflagefläche jeweils mit einer rutschhemmenden, insbesondere gummielastischen, Oberfläche beschichtet ist. Auch hierbei kann es sich um eine Beschichtung der Backen handeln oder um ein zusätzliches Element bzw. aufgelegtes flaches Teil, welches großflächig auf die Backe aufgeklebt ist. Die rutschhemmende Oberfläche kann ebenfalls ein Material wie Elastomer (insbesondere TPE), Gummi, Kautschuk, Silikonkautschuk oder dergleichen aufweisen. Somit wird das mobile Endgerät, welches in der Regel eine sehr glatte Rückseite aufweist, großflächiger gegen ein seitliches Verschieben gehemmt. Solche gummielastischen Oberflächen wirken besonders gut, wenn das Gehäuse des mobilen Endgeräts aus Metall ist, was aber gerade bei hochpreisigen mobilen Endgeräten oft der Fall ist. Bei einer Variante weisen beide Backen eine solche gummielastische Oberfläche auf. Grundsätzlich kann aber auch nur eine der Backen eine solche gummielastische Oberfläche aufweisen.

Bei einer ganz besonders bevorzugten Variante weist der Tablet-Halter als eine rutschhemmende Oberfläche einen Auflageflächenbereich auf, an welchem ein zu haltendes mobiles Endgerät mit seiner Rückseite anliegt, welches mit einer Haftoberfläche ausgestattet ist. Das heißt, z. B. neben der gummielastischen Oberfläche ist nun noch ein Auflagenbereich so ausgestaltet, dass die Rückseite des mobilen Endgerätes hieran haftet. Solche Haftoberflächen können mit einer klebbaren Klebefläche, ähnlich wie bei den bekannten Haftnotizzetteln, ausgebildet sein. Vorzugsweise kann die Haftoberfläche durch eine mikrostrukturierte Silikonfolie gebildet werden. Hierbei basiert die Haftung auf den van der Waals Anziehungskräften. Die Silikonfolie kann vorzugsweise derart mikrostrukturiert sein, dass sie ca. 29.0000 Haftelemente pro cm² aufweist. Sie kann aber auch noch feiner strukturiert sein.

Die Haftoberfläche lässt ein seitliches Verschieben des mobilen Endgerätes gegenüber dieser Haftoberfläche überhaupt nicht zu, sondern es ist nur möglich, das mobile Endgerät im Wesentlichen senkrecht zur Haftoberfläche wieder abzunehmen, wobei durch die Haftoberfläche kein Haftmaterial an die Oberfläche des Tablets abgegeben wird, d. h. die Haftoberfläche löst sich rückstandsfrei von der Tablet-Rückseite.

Ein solcher Auflagenflächenbereich mit einer Haftoberfläche kann auch Teil der Auflagefläche einer der Backen sein. Vorzugsweise handelt es sich dann um die Backe, welche bei einem Einklemmen des mobilen Endgerätes am Tablet-Halter unten ist, sodass das Tablet in die unten befindlichen Krallen eingestellt und gegen den Oberflächenbereich mit der Haftoberfläche gelegt werden kann. Beim Zusammenschieben der Backen schiebt sich dann die obere Backe auf das mobile Endgerät, und die Krallen der oberen Backe umgreifen dieses auch an der oberen Kante.

Bei einer besonders bevorzugten Variante ist die Haftoberfläche an einem separaten Anlagenflächenelement angeordnet, welches in einem Bereich zwischen den zumindest etwas geöffneten Backen mit dem Führungsschlitten koppelbar ist. Beispielsweise kann dieses Anlageflächenelement ein entsprechendes Profil aufweisen, mit dem es passig auf dem Führungsschlitten aufgesetzt werden kann. Zusätzlich kann es Vorsprünge oder dergleichen aufweisen, um auch einen Halt in den Führungsschienen des Führungsschlittens zu ermöglichen. Mit Hilfe eines solchen separaten Anlagenflächenelements sind auch Tablet-Halter mit einer zusätzlichen Sicherung gegen seitliches Herausziehen des mobilen Endgerätes zwischen den Backen bzw. Krallen nachrüstbar.

Der Führungsschlitten ist bevorzugt schwenkbar an einer Basis des Tablet-Halters befestigt, besonders bevorzugt um eine Achse, die senkrecht zur Oberfläche des mobilen Endgerätes steht, sodass das mobile Endgerät insbesondere von einer Hochkant- in eine Breitformat-Stellung und zurück geschwenkt werden kann.

Die Basis selber kann prinzipiell in beliebiger Form ausgestaltet sein, z. B. als in mehrere Richtungen schwenkbarer Schwenkarm, als hochklappbarer Ständer, der auf eine Tischoberfläche gestellt werden kann, als Basis mit einem Befestigungselements zum Festschrauben an einem Tisch, einem Regal, einer Wand oder auch einer Raumdecke oder mit einer Klemmung zum Festklemmen an irgendwelchen Gegenständen etc. Ebenso kann die Basis auch als Ständer ausgebildet sein, der auf dem Boden aufgestellt werden kann.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel schematisch. Es zeigen:
- Figur 1: eine perspektivische Frontansicht eines Ausführungsbeispiels eines erfindungsgemäßen Tablet-Halters mit einem darin gehaltenen Tablet-PC,
- Figur 2: eine seitliche Ansicht einer detaillierten perspektivischen Oberansicht des Tablet-Halters aus Figur 1 mit dem darin gehaltenen Tablet-PC,
- Figur 3: eine perspektivische Frontansicht des Ausführungsbeispiels des Tablet-Halters nach Figur 1, jedoch ohne Tablet-PC,
- Figur 4: eine Draufsicht auf eine Backe des Tablet-Halters der Figuren 1 bis 3, jedoch ohne Tablet-PC,
- Figur 5: eine perspektivische Unteransicht der Backe nach Figur 4 ohne Deckel,
- Figur 6: eine Unteransicht der Backe nach Figur 5 mit Deckel,
- Figur 7: eine Draufsicht auf ein Sockelteil eines Gehäuses des Führungsschlittens des Tablet-Halters der Figuren 1 bis 4,
- Figur 8: eine Unteransicht eines Gehäusedeckels eines Gehäuses des Führungsschlittens des Tablet-Halters der Figuren 1 bis 4,
- Figur 9: einen Querschnitt durch die Klemmeinrichtung des TabletHalters der Figuren 1 bis 4,
- Figur 10: einen Längsschnitt (parallel zur Tablet-Oberfläche) durch die Klemmeinrichtung des Tablet-Halters der Figuren 1 bis 9 von der Rückseite aus gesehen, zur Erläuterung eines Ausführungsbeispiels des Bewegungsmechanismus und der Schließeinrichtung, mit einem Blockierelement in der Blockierstellung,
- Figur 11: einen Schnitt durch die Klemmeinrichtung des Tablet-Halters wie in Figur 10, jedoch mit dem Blockierelement in der Öffnungsstellung,
- Figur 12: eine perspektivische Ansicht eines Ausführungsbeispiels einer Kralleneinlage des Tablet-Halters der Figuren 1 bis 4,
- Figur 13: eine perspektivische Ansicht eines Ausführungsbeispiels eines zusätzlichen Anlageflächenelements für einen Tablet-Halter der Figuren 1 bis 4.

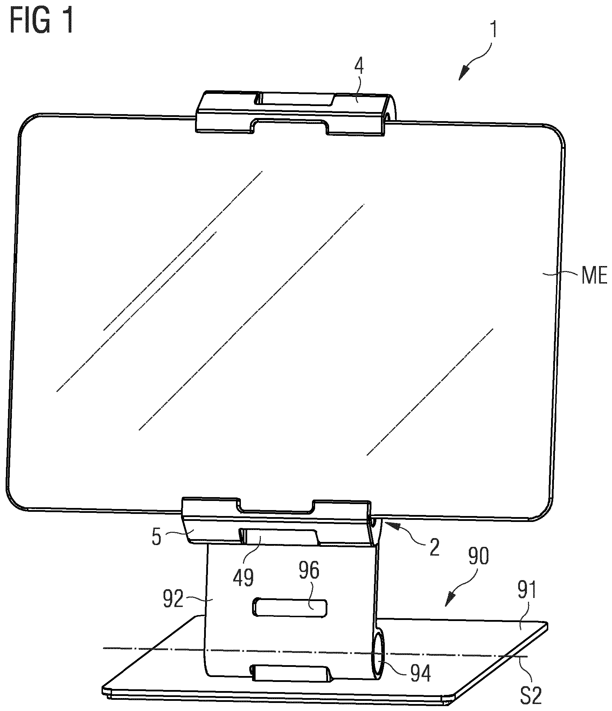

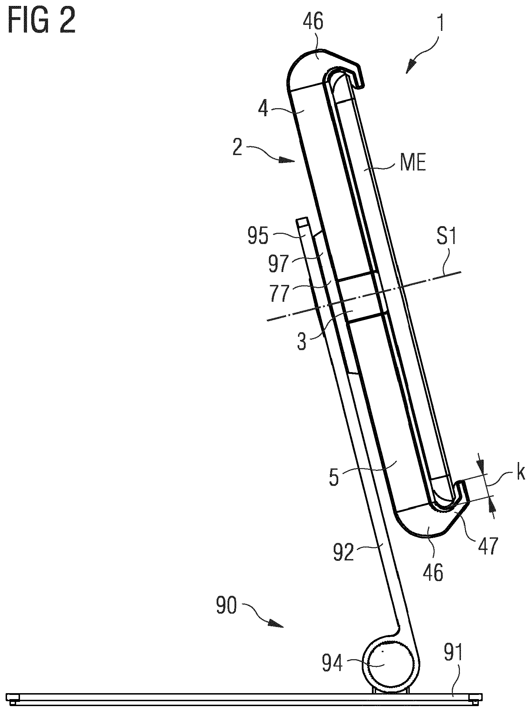

Bei dem in den Figuren 1 bis 3 dargestellten Ausführungsbeispiel weist der Tablet-Halter 1 eine Basis 90 in Form eines Tischfußes auf, welcher eine Grundplatte 91 zum Aufstellen des Tablet-Halters 1 auf einer Tischplatte (nicht dargestellt) umfasst. Auf dieser Grundplatte 91 ist über ein Schwenkgelenk 94 ein Schwenkarm 92 angeordnet. An diesem ist an einem oberen Endbereich 95 über ein Kopplungselement 97 die Klemmeinrichtung 2 des Tablet-Halters 1 befestigt. In dieser Klemmeinrichtung 2 wird das mobile Endgerät ME, in den Figuren 1 und 2 ein üblicher Tablet-PC (im Folgenden wird daher das mobile Endgerät ME auch nur kurz ohne Beschränkung der Allgemeinheit als "Tablet" bezeichnet) gehalten.

Mit Hilfe des Schwenkgelenks 94 ist der Arm 92 um eine senkrecht zur Tischplatte bzw. Grundplatte 91 verlaufende Schwenkachse S2 verschwenkbar, sodass sich die Neigung des Tablets in Bezug auf den Betrachter einstellen lässt. Vorzugsweise handelt es sich um ein selbsthaltendes Schwenkgelenk 94, das in jeder eingestellten Position von selber stehen bleibt.

Das Kopplungselement 97 wirkt mit einem Kopplungselement 77 am Führungsschlitten 3 so zusammen, dass sich die Klemmeinrichtung 2 mit einem darin befindlichen Tablet ME um eine senkrecht zur Oberfläche des Tablet-Halters bzw. der Display-Oberfläche des gehaltenen Tablets ME verlaufende Drehachse S1 drehen lässt und so das Tablet von der Figur 1 dargestellten Querformat-Position in eine Hochformat-Position gebracht werden kann. Die Drehachse S1 verläuft senkrecht zur Schwenkachse S2 des Schwenkarms 92. Im Schwenkarm 92 befindet sich ein Durchbruch 96, durch den ein Kabel für das Tablet ME hindurchgeführt werden kann.

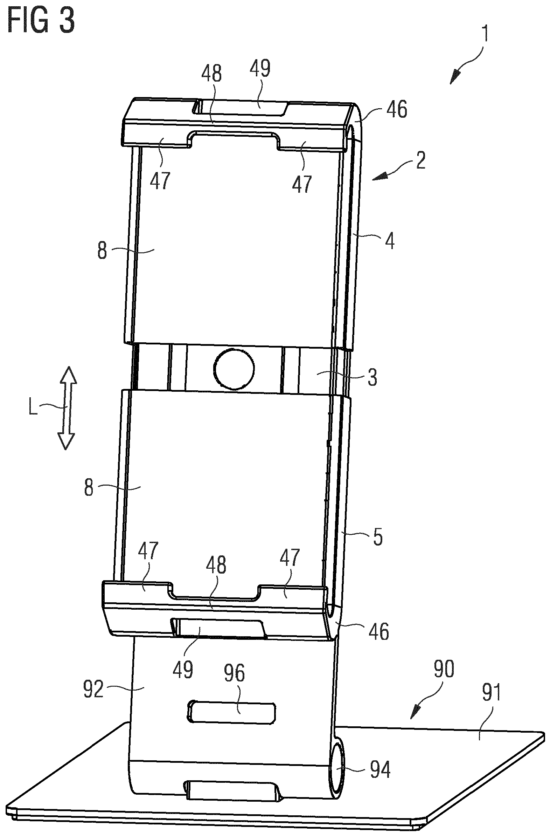

Figur 3 zeigt den Tablet-Halter 1 in einer geöffneten Stellung zur Aufnahme eines Tablets ME, jedoch ohne Tablet ME. Die Klemmeinrichtung 2 weist einen Führungsschlitten 3 auf, welcher hier in einem mittleren Bereich erkennbar ist, sowie zwei daran in einer Längsrichtung L verschiebbar angeordnete Backen 4, 5, die an ihren Enden jeweils Krallenteile 46 aufweisen. Mit diesen Krallenteilen 46, welche später noch detaillierter beschrieben werden, wird das Tablet ME, wie in den Figuren 1 und 2 dargestellt, an zwei gegenüberliegenden Kanten umgriffen und somit zwischen den Backen 4, 5 eingeklemmt.

Im Inneren des Führungsschlittens 3 befindet sich ein Bewegungsmechanismus 6, über den die beiden Backen 4, 5 so miteinander gekoppelt sind, dass bei einer Bewegung einer der Backen 4, 5 relativ zum Führungsschlitten 3 die gegenüberliegende Backe 5, 4 synchron relativ zum Führungsschlitten 3 mitbewegt wird.

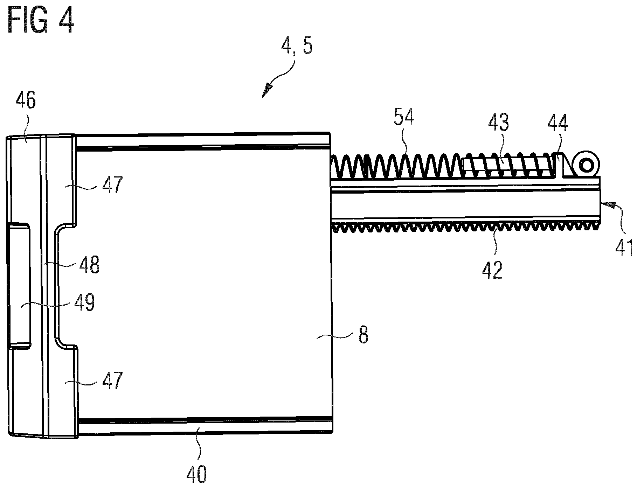

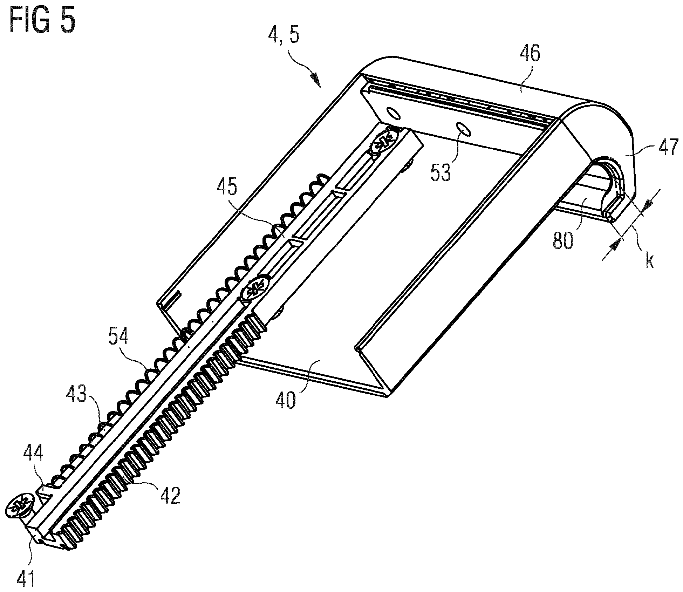

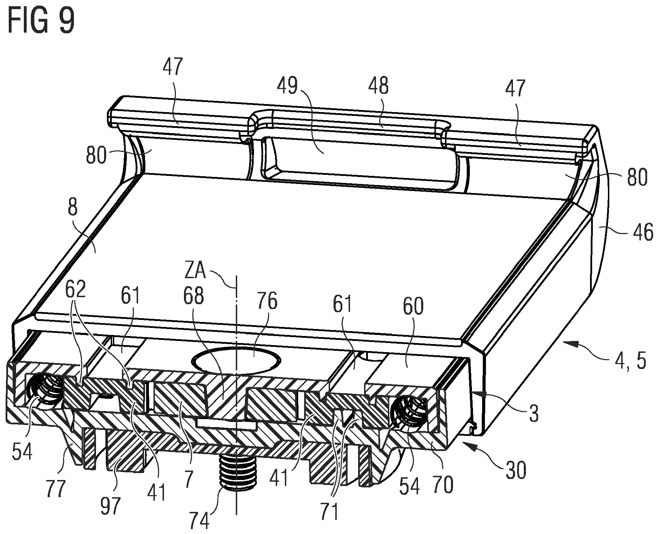

Eine wesentliche Komponente dieses Bewegungsmechanismus 6 sind zwei Zahnstangen 41, wobei jeweils eine Zahnstange 41 einer Backe 4, 5 zugeordnet ist. Die Backen 4, 5 sind in den Figuren 4 bis 6 genauer dargestellt. Sie weisen jeweils ein Gehäuse 40 auf, in welchem innenseitig ein Befestigungsabschnitt 45 einer parallel zur Längsrichtung L der Klemmeinrichtung 2 verlaufenden Zahnstange 41 befestigt ist. Diese Zahnstange 41 weist an einem über die jeweilige Backe 4, 5 hinausragenden Abschnitt eine Zahnkante 42 auf. Die Zahnstange 41 ist bei jeder der beiden Klemmbacken 4, 5, welche im Übrigen identisch aufgebaut sind, seitlich von einer parallel zur Längsrichtung L verlaufenden Mittelachse angeordnet, und die Zahnkante 42 ist jeweils in Richtung auf diese virtuelle Mittelachse gerichtet. Werden zwei solcher Backen 4, 5 wie in der Position in Figur 3 einander gegenüberliegend angeordnet, so weisen die beiden Zahnkanten 42 der Zahnstangen 41 der beiden Backen 4, 5 aufeinander zu, wobei zwischen ihnen ein Abstand verbleibt. In diesen Bereich zwischen den Zahnstangen 41 befindet sich (siehe z. B. Figur 9) ein im Führungsschlitten 3 gelagertes, passendes Zahnrad 7, welches mit den Zahnkanten 42 kämmt, wodurch die mechanische Kopplung der Zahnstangen 41 und somit der Backen 4, 5 erfolgt.

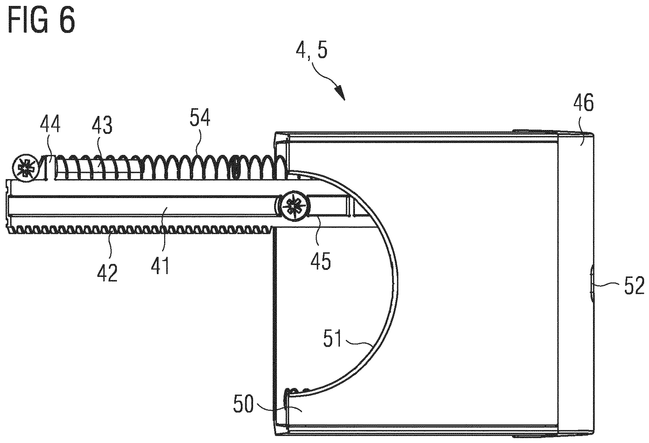

An den Gehäusen 40 der Backen 4, 5 sind jeweils an dem Ende, welches der Seite gegenüberliegt, an dem die Zahnstange 42 aus dem Gehäuse 40 herausragt, die Krallenteile 46 mit Krallen 47 befestigt. Damit die Innenseite mit der darin befestigten Zahnstange 41 für den Benutzer auch mit weit auseinander gezogenen Backen 4, 5 nicht von hinten zugänglich ist, sind die Backen 4, 5 an ihrer Hinterseite mit einem Deckel 50 versehen (siehe Figur 6), der in Richtung auf die Zahnstangen einen halbkreisförmigen Ausschnitt 51 aufweist, um im zusammengeschobenen Zustand genügend Freiraum für das Kopplungselement 77 zu belassen. Dieser Deckel 50 liegt dann an der Rückseite des Führungsschlittens 3 an, d. h. die Gehäuse 40 der der Backen 4, 5 umschließen jeweils ein Ende des Führungsschlittens 3, bzw. im zusammengeschobenen Zustand der Backen 4, 5 ist jeweils eine Hälfte des Führungsschlittens 3 nahezu vollständig durch ein Gehäuse 40 der Backen 4, 5 umschlossen.

Die Zahnstangen 41 weisen jeweils auf ihrer von der Zahnkante 42 abgewandten Seite eine über einen Steg 44 mit dem Hauptteil der Zahnstange 41 gekoppelte Federlagerungsstange 43 auf, welche parallel zur Längsrichtung der Zahnstange 41 verläuft. Über diese Federlagerungsstange 43 wird jeweils ein Ende einer Druckfeder 54 gesteckt (siehe z. B. Figuren 4 und 6), die sich jeweils mit dem anderen Ende an einer Abstützfläche 64 im Führungsschlitten 3 abstützt (siehe z. B. Figur 9). Diese Druckfedern 54 sorgen als Rückstellelemente 54 dafür, dass die Backen 4, 5 in den zusammengeschobenen Zustand gedrückt werden.

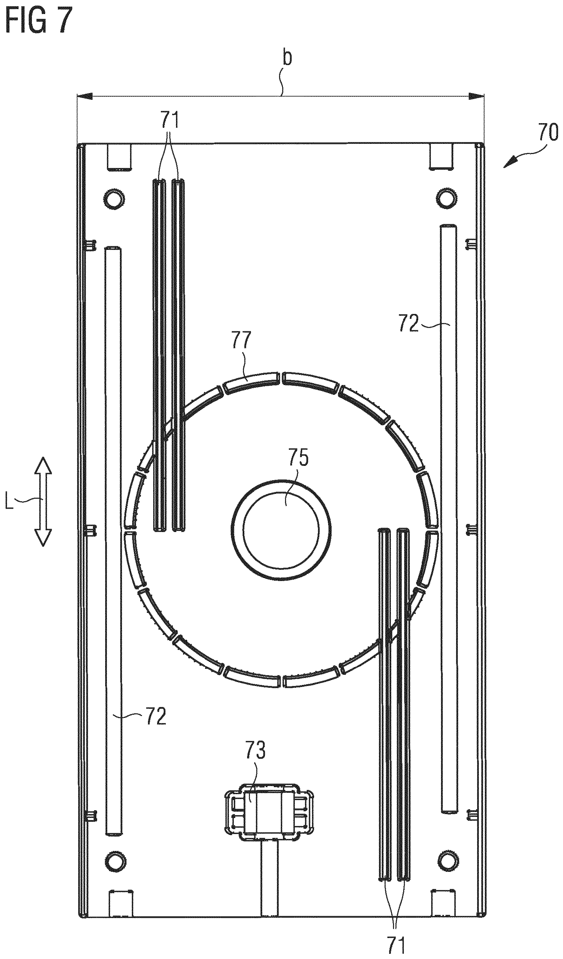

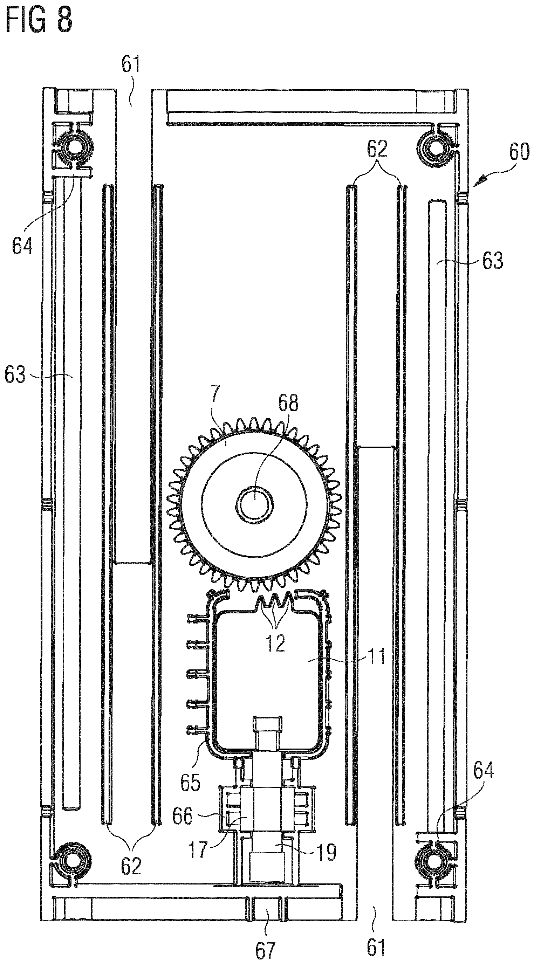

Der Aufbau eines im Zusammenhang mit diesen Backen 4, 5 nutzbaren Führungsschlittens 3 wird aus den Figuren 7 bis 9 ersichtlich. Der Führungsschlitten 3 weist ein Gehäuse 30 auf, welches ein Sockelteil 70 sowie einen Deckel 60 umfasst. Figur 7 zeigt dieses Sockelteil 70 und Figur 8 den Deckel 60 und Figur 9 einen Querschnitt durch die Klemmeinrichtung 2 im mittleren Bereich des Führungsschlittens 3, woraus der Zusammenbau des Gehäuses 30 gut erkennbar ist. Wie zu ersehen ist, ist der Deckel 60 ebenso wie das Sockelteil 70 im Querschnitt U-förmig, jedoch etwas schmaler, sodass der Deckel 60 mit seinen Seitenkanten genau zwischen den Seitenkanten des Sockelteils 70 aufgenommen werden kann.

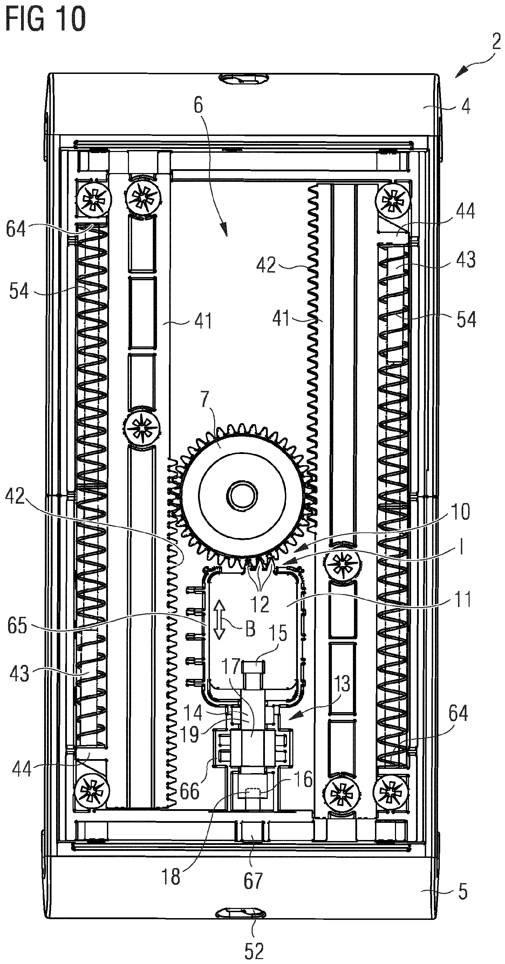

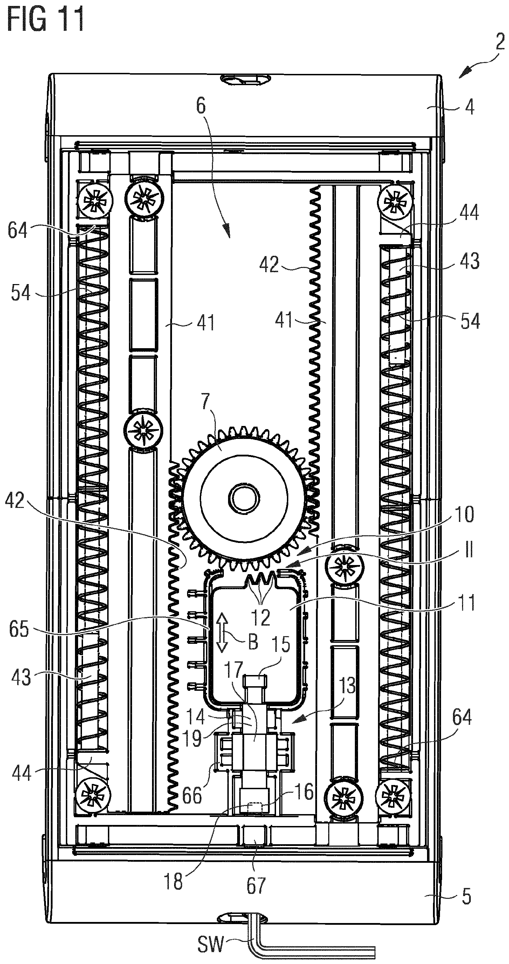

Das Sockelteil 70 des Gehäuses 30 des Führungsschlittens 3 ist in einem zentralen Bereich mit einem Zahnradlagergegenstück 75 zur Kopplung mit einem Zahnradlager 68 (siehe Figur 8) für das Zahnrad 7 sowie einem koaxial darum angeordneten ringförmigen Kopplungselement 77 zur Kopplung mit dem Kopplungselement 97 am Schwenkarm 95 ausgestattet. Weiterhin befinden sich in diesem Sockelteil 70 Führungsschienen 71 zur Führung der Zahnstangen 41, die jeweils eine an diese Führungsschienen 71 angepasste, in Längsrichtung der Zahnstange 41 verlaufende Nut aufweisen. Dies ist beispielsweise im Querschnitt der Figur 9 recht gut zu sehen. Außerdem befinden sich in diesem Sockelteil Führungen 72 in Form von Nuten für die Druckfedern 54. In einem Bereich zwischen dem zentralen Zahnradlager 75 und einem zu einer der Backen weisenden Rand weist das Sockelteil 70 außerdem eine Lagerung 73 auf, in welcher eine Spindelmutter 17 aufnehmbar ist, die für den Schließmechanismus 13 des Bewegungsmechanismus 6 verwendet wird, wie er später noch anhand der Figuren 10 und 11 erläutert wird.

Im Deckel 60 ist zentral das Zahnradlager 68 angeordnet. Auf diesem Zahnradlager 68, welches sich am Zahnradlagergegenstück 75 im Sockelteil 70 abstützt, ist das Zahnrad 7 um eine senkrecht zur Flachseite des Deckels 60 verlaufende zentrale Achse ZA rotierbar gelagert (siehe Figur 8 und 9). Durch das Zahnradlager 68 hindurch kann von vorn eine Schraube 74 durch das Gehäuse 30 des Führungsschlittens 3 geschraubt werden, um diesen am Kopplungselement 97 am Schwenkarm 92 der Basis 90 festzuschrauben, das mit dem Kopplungselement 77 am Gehäuse 30 des Führungsschlittens 3 zusammenwirkt. Die Schraube 74 kann oben durch einen Deckel 76 abgedeckt werden.

Seitlich neben diesem Zahnrad 7 verlaufen in Längsrichtung L jeweils Führungsschienen 62, die in Nuten auf den Oberseiten der Zahnstangen 41 eingreifen (siehe Figur 9). Passend zu den Zahnstangen 41 der Backen 4, 5 sind außerdem zwischen den Führungsschienen 62 jeweils Schlitze 61 im Deckel 60 angeordnet, welche sich von der gegenüberliegenden Stirnseite aus jeweils bis knapp über eine Mittellinie des Deckels 60, d. h. bis hinter das Zahnrad 7, erstrecken. Im Bereich dieser Schlitze 61 sind die Zahnstangen 41 jeweils mit den Backen 4, 5 gekoppelt. Diese Schlitze 61 sind ebenfalls gut im Querschnitt von Figur 9 zu erkennen. Parallel zu den Führungsschienen 62 verlaufen jeweils auch hier Führungen 63 in Form von Nuten für die Druckfedern 54. Diese sind jeweils an einem stirnseitigen Ende, welches dem Schlitz 61 benachbart ist, der für die Zahnstange 41 vorgesehen ist, der die betreffende Druckfeder 54 zugeordnet ist, durch eine Abstützfläche 64 für die Druckfedern 54 abgeschlossen. Die Druckfeder 54 einer Zahnstange 41 wird somit zwischen dieser Abstützfläche 64 und dem Steg 44 der betreffenden Zahnstange 41 zu der daran angeordneten Federlagerungsstange 43 eingeklemmt (siehe z. B. Figur 10), sodass die Druckfeder 54 die jeweilige Backe 4, 5, in Richtung zur Mitte des Führungsschlittens 3 drückt. Dadurch wird dafür gesorgt, dass die Backen 4, 5 ohne äußere Krafteinwirkung wieder zusammengedrückt werden.

Außerdem befindet sich im Deckel 60 des Führungsschlittens 3 eine Blockierelement-Führung 65 für ein Blockierelement 11 sowie ebenfalls eine Lagerung 66 für die Spindelmutter 17 der Schließeinrichtung 10, welche später erläutert wird. Weiterhin ist hier ein Kanal 67 für ein Schließwerkzeug SW angeordnet, der koaxial zur Blockierelement-Führung 65 und die Lagerung 66 für die Spindelmutter 17 angeordnet ist (in Figur 8 im unteren Bereich des Gehäusedeckels). Werden das Sockelteil 70 und der Deckel 60 zusammengesetzt, so wird die Spindelmutter 17 der Schließeinrichtung 10 zwischen den Lagerungen 66 und 73 sicher gehalten.

Der gesamte Bewegungsmechanismus 6 zur Kopplung der beiden Backen 4, 5 im Führungsschlitten 3 und die Schließeinrichtung 10 werden nun anhand der Figuren 10 und 11 genauer erläutert. Dabei zeigen die Figuren 10 und11 jeweils einen Schnitt durch die zusammengesetzte Klemmeinrichtung 2 mit zusammengeschobenen Backen 4, 5 von hinten gesehen, d. h. aus Richtung der Rückseite der Klemmeinrichtung 2 (wobei als Vorderseite der Klemmeinrichtung 2 die Seite gesehen wird, an welcher das Tablet eingeklemmt wird).

Wie hier zu sehen ist, sind die Abmessungen der beiden Zahnstangen 41 und des Zahnrads 7 so gewählt, dass das Zahnrad 7 in die Zahnkanten 42 der Zahnstangen 41 eingreift. Wird nun eine der beiden Backen 4, 5 aus dem Gehäuse 30 des Führungsschlittens 3 herausgezogen, so wird über die Zahnkante 42 der zugehörigen Zahnstange 41 das Zahnrad 7 bewegt, das dann automatisch über die Zahnkante 42 der Zahnstange 41 der anderen Backe 5, 4 diese mitbewegt. Somit kommt es immer zu einer gegenläufig synchronen Bewegung beider Backen 4, 5.

Um ein Tablet ME möglichst sicher zu halten und ein unbefugtes Öffnen bzw. Auseinanderschieben der Backen 4, 5 zu vermeiden, sodass das Tablet ME aus der Klemmeinrichtung 2 entnommen werden kann, dient eine Schließeinrichtung 10.

Diese umfasst als ein wesentliches Teil das Blockierelement 11, welches in einer Bewegungsrichtung B verschiebbar in der Blockierelement-Führung 65 gelagert ist. Dieses Blockierelement 11 besteht aus einem relativ stabilen, 5 mm hohen (senkrecht zur Bildebene gemessen) Kunststoffblock mit daran angeformten, in Richtung des Zahnrads 7 weisenden Zähnen 12.

In Figur 10 ist dieses Blockierelement 11 in einer Blockierstellung I gezeigt, in welcher die Zähne 12 des Blockierelements 11 in die Zähne des Zahnrads 7 eingreifen. Figur 11 zeigt das Blockierelement 11 in einer Öffnungsstellung II, in der die Backen 4, 5 bewegt werden können. Die Zähne 12 weisen eine Form auf, die so gewählt ist, dass bei einem Einschieben des Blockierelements 11 von der Öffnungsstellung II in die Blockierstellung I das Zahnrad 7 bevorzugt in eine Richtung gedreht wird, sodass die Zahnstangen 41 ein wenig in eine Richtung bewegt werden, in der sich die Backen 4, 5 weiter zusammenziehen.

Wie hier zu sehen ist, ist das Blockierelement 11 zwischen den Zahnstangen 41 im Gehäuse 30 des Führungsschlittens 3 angeordnet und die lineare Verschiebung des Blockierelements in der Blockierelement-Führung 65 in der Bewegungsrichtung B erfolgt parallel zur Längsrichtung L des Führungsschlittens 3, d. h. parallel zur Bewegungsrichtung der Backen 4, 5. Um das Blockierelement 11 in der Richtung B linear zu verschieben, ist dieses mit einer Treibstange 19 gekoppelt. Diese Treibstange 19 weist zum Blockierelement 11 hin einen Kopf 15 mit einem stirnseitig verdickten Durchmesser und in einem Abstand von der betreffenden Stirnseite verdünnten Durchmesser, d. h. einer ringförmigen Nut, auf. Mittels dieses verdickten Kopfs 15 ist das Blockierelement 11 formschlüssig mit der Treibstange 19 gekoppelt und folgt somit der Bewegung der Treibstange 19 in der Bewegungsrichtung B.

In einem mittleren Bereich weist die Treibstange 19 einen Gewindeabschnitt 14 auf, der gemeinsam mit der Spindelmutter 17, die im Gehäuse 30 des Führungsschlittens 3 in den Lagerungen 66, 73 ortsfest gehalten wird, ein relativ einfaches Schraubgetriebe 20 bildet. Wird die Treibstange 19 um ihre Längsachse, die Schlüssel-Rotationsachse R, verdreht, bewirkt dies automatisch ein Hereinschrauben oder Herausschauben der Treibstange 19 und somit eine Linearverschiebung des Blockierelements 11 in der Bewegungsrichtung B. Durch eine Drehbewegung der Treibstange 19 ist es folglich möglich, das Blockierelement 11 von der Öffnungsstellung II in die Blockierstellung I zu bewegen oder umgekehrt.

Am äußeren, vom Blockierelement 11 wegweisenden Endbereich 16 der Treibstange 19 ist stirnseitig die Schließwerkzeugaufnahme 18 eingebracht. Diese Schließwerkzeugaufnahme 18 ist an die Form eines geeigneten Schließwerkzeugs SW angepasst, sodass mit diesem Schließwerkzeug SW in die Schließwerkzeugaufnahme 18 eingegriffen werden kann, um die Treibstange 19 um die Schlüssel-Rotationsachse R zu drehen. Die Treibstange 19 der Schließwerkzeugaufnahme 18 sowie die Spindelmutter 17 bilden folglich einen Schließmechanismus 13, um das Blockierelement 11 mittels eines in der Schließwerkzeugaufnahme 18 aufgenommenen Schließwerkzeugs aus der oder in die Blockierstellung I zu bewegen.

In Figur 11 ist schematisch als einfaches Schließwerkzeug SW ein Inbus^{®}-schlüssel dargestellt. Damit das Schließwerkzeug SW mit der Spitze in die Schließwerkzeugaufnahme 18 der Treibstange 19 eingreifen kann, befinden sich sowohl im Gehäuse 30 des Führungsschlittens 3 als auch im Gehäuse zumindest einer der Backen 4, 5 jeweils auf einer Achse Schließwerkzeug-Kanäle 67, 53. Die Krallenteile 46 weisen an der entsprechenden Stelle eine Schließwerkzeug-Öffnung 52 auf, durch die das Schließwerkzeug in den Kanal 53, 67 eingesteckt werden kann. Ohne eine intensivere Untersuchung ist von außen nicht erkennbar, wie die Schließwerkzeugaufnahme 18 aussieht und mit welchem Schließwerkzeug SW eine Betätigung des Schließmechanismus 13 bzw. Öffnung der Schließeinrichtung 10 möglich wäre.

Jedes Krallenteil 46 der Backen 4, 5 weist hier zwei Krallen 47 auf, die über einen Steg 48 miteinander verbunden sind. Dadurch ergibt sich zwischen den Krallen 47 ein Durchlass 49 für ein Kabel zum Anschluss an das Tablet ME, da sich bei den meisten Tablets der Kabelanschluss mittig an einer Tabletkante befindet.

Die Krallen 47 weisen einen Krallenüberstand k von mindestens 5 - 6 mm auf. Dies macht ein Aufhebeln der Krallen 47 gegen die normalen Toleranzen der Bauteile des Bewegungsmechanismus 6 und der Schließeinrichtung 10 ohne Werkzeug nahezu unmöglich.

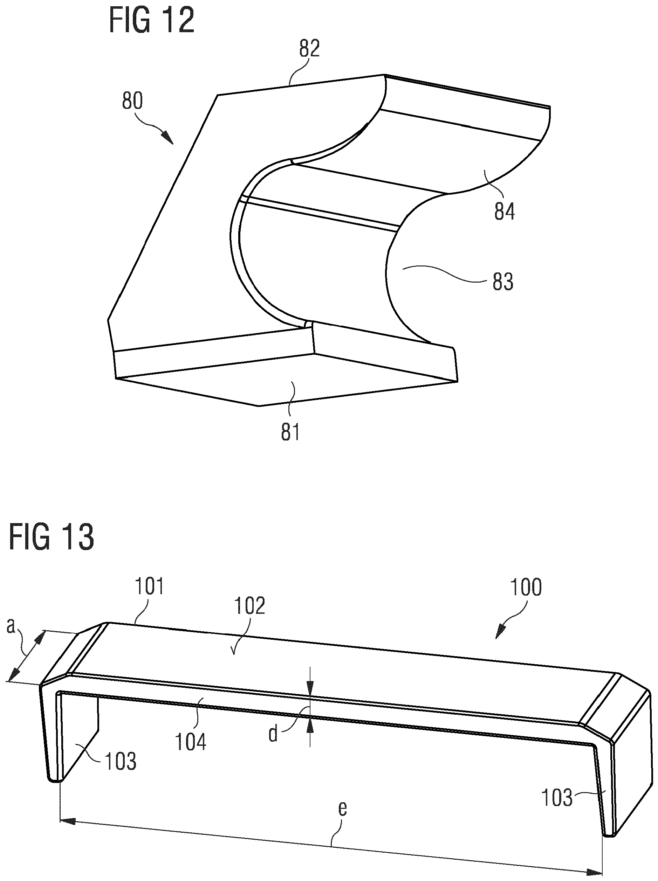

Damit das Tablet ME nicht aus den mit Hilfe der Schließeinrichtung 10 sicher in der Haltestellung verschlossenen Krallen 47 seitlich herausgezogen werden kann, sind die Krallen 47 innenseitig mit speziellen Kralleneinlagen 80 versehen. Die Kralleneinlagen 80 sind nach Art eines Blocks mit einer Unterseite 81 und einer Oberseite 82 so ausgestaltet, dass sie in die Krallen 47 einklipsbar sind, wobei die Unterseite 81 in Richtung auf die Oberseite der jeweiligen Backe 4, 5 weist, an welcher die Rückseite eines gehaltenen Tablets ME zu liegen kommt. Zusätzlich können die Kralleneinlage auf den zu den Krallen weisenden Seiten, d.h. auf der Unterseite 81, der Oberseite 82 und/oder Rückseite auch noch Befestigungselemente aufweisen, welche formschlüssig mit entsprechenden Befestigungselementen zusammenwirken (nicht dargestellt), z. B. zur Bildung von Nut-Feder-Verbindungen etc. Zur offenen Seite hin weisen die Kralleneinlagen 80 eine Einbuchtung 83 auf, vorzugsweise mit einer Wulst 84, die gegen die Frontseite des Tablets ME drückt, wenn die Kralle 47 bzw. die Kralleneinlage 80 das Tablet ME an dessen Kante umgreift. Ein Beispiel für eine solche Kralleneinlage 80 ist perspektivisch in Figur 12 gezeigt. Zu einem Tablet-Halter 1 können auch unterschiedlich geformte Kralleneinlagen 80 zur Verfügung gestellt werden, die für verschiedene Tablet-Typen optimiert sind.

Zur zusätzlichen Sicherung ist zumindest eine der beiden Backen 4, 5 mit einer speziellen Auflagefläche 8 mit einer gummielastischen Oberfläche versehen. Hierbei kann es sich um eine gummielastische Einlage, vorzugsweise aus TPE, oder auch um eine gummielastische Beschichtung oder dergleichen handeln. Die gummielastische Oberfläche sorgt dafür, dass eine Parallelverschiebung der Rückseite des Tablets ME auf der Oberfläche stark behindert wird.

Weiter zusätzlich kann auch dafür gesorgt werden, dass zumindest eine der Oberflächen mit einer Haftoberfläche ausgestattet ist, welche leicht klebrig an der Rückseite des Tablets haftet. Diese Haftoberfläche wird durch eine mikrostrukturierte Silikonfolie mit ca. 29.0000 Haftelementen pro cm² oder mehr gebildet.

Eine solche Haftoberfläche 102, die nicht bei jedem Tablet-Typ benötigt wird, kann auch in einem Anlageflächenbereich 101 eines separaten Anlageflächenelements 100 angeordnet sein, welches zwischen den Backen 4, 5 mit dem Führungsschlitten 3 koppelbar ist. Ein solches Anlageflächenelement 100 ist in Figur 13 dargestellt. Es weist ein U-förmiges brückenartiges Profil mit einem flachen U-Steg 104, an dem sich der Anlageflächenbereich 101 mit der Haftoberfläche 102 befindet, und zwei senkrecht zu diesem Anlagenflächenbereich 101 vom Anlageflächenbereich 101 nach unten, d. h. zu dessen Rückseite wegweisenden U-Schenkel 103 auf. Das lichte Innenmaß zwischen diesen U-Schenkeln 103 weist eine Breite e auf, welche der Breite b (siehe Figur 7) des Gehäuses 30 des Führungsschlittens 3 entspricht, sodass dieses Anlageflächenelement 100 zwischen den geöffneten Backen 4, 5 auf den Führungsschlitten 3 aufgelegt werden kann und auf diesem in Längsrichtung L verschiebbar ist.

Die Höhe a dieses zusätzlichen Anlageflächenelements 100 in Längsrichtung L beträgt nur 16 mm. Die Dicke d des U-Stegs 104 entspricht der Dicke des Gehäuses der Backen 4, 5 einschließlich der Auflagefläche 8 im Bereich der Wand, welche zur Rückseite des Tablets ME zeigt. Das heißt, wenn das Anlageflächenelement 90 zwischen die geöffneten Backen 4, 5 auf den Führungsschlitten 3 aufgeschoben wird, so bilden die Auflageflächen 8 der Backen 4, 5 gemeinsam mit dem Anlageflächenbereich 101 des Anlageflächenelements 100 eine durchgehende plane Oberfläche. Im Bereich des Anlageflächenbereichs 100 befindet sich die Haftoberfläche 102, die an der Rückseite eines daran angelegten mobilen Endgeräts ME klebrig anhaftet und ein seitliches Verschieben der Rückseite des Tablets ME gegenüber diesem Anlageflächenelement 100 verhindert. Da das Anlageflächenelement 100 andererseits über die U-Schenkel 103 am Führungsschlitten 3 seitlich fixiert ist, kann somit auch das Tablet ME nicht mehr seitlich zwischen den Backen 4, 5 herausgezogen werden. Das Anlageflächenelement 100 muss hierzu nur gegen die bereits auseinandergezogenen Backen auf dem Führungsschlitten 3 aufgelegt und gegen die untere Backe geschoben werden. Anschließend wird das Tablet ME mit der unteren Kante hinter die Krallen der unteren Backe aufgelegt und gegen die Haftoberfläche 102 des Anlagenflächenelements 100 angelehnt. Dann können die Backen 4, 5 wieder zusammengeschoben werden und der Bewegungsmechanismus 6 kann mit Hilfe der Schließeinrichtung 10, wie zuvor beschrieben, sicher verschlossen werden.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Insbesondere können die oben beschriebenen besonderen Merkmale der Varianten gegebenenfalls auch miteinander kombiniert werden. Weiterhin schließt die Verwendung der unbestimmten Artikel "ein" bzw. "eine" nicht aus, dass die betreffenden Merkmale auch mehrfach vorhanden sein können.

### Bezugszeichenliste

1 Tablet-Halter
2 Klemmeinrichtung
3 Führungsschlitten
4 Backe
5 Backe
6 Bewegungsmechanismus
7 Zahnrad / Verzahnungselement / bewegliches Element
8 Auflagefläche
10 Schließeinrichtung
11 Blockierelement
12 Zähne
13 Schließmechanismus
14 Gewindeabschnitt
15 Kopf
16 Endbereich
17 Spindelmutter
18 Schließwerkzeugaufnahme
19 Treibstange
20 Schraubgetriebe
30 Gehäuse
40 Gehäuse
41 Zahnstange / Verzahnungselement / bewegliches Element
42 Zahnkante
43 Federlagerungsstange
44 Steg
45 Befestigungsabschnitt
46 Krallenteil
47 Kralle
48 Steg
49 Durchlass
50 Deckel
51 Ausschnitt
52 Schließwerkzeug-Öffnung
53 Schließwerkzeug-Kanal
54 Rückstellelement / Druckfeder
60 Deckel
61 Schlitz
62 Führungsschienen
63 Führungen
64 Abstützfläche
65 Blockierelement-Führung
66 Lagerung
67 Schließwerkzeug-Kanal
68 Zahnradlager
70 Sockelteil
71 Führungsschienen
72 Führungen
73 Lagerung
74 Schraube
75 Zahnradlagergegenstück
74 Befestigungsteil
76 Deckel
77 Kopplungselement
80 Kralleneinlagen
81 Unterseite
82 Oberseite
83 Einbuchtung
84 Wulst
90 Basis
91 Grundplatte
92 Schwenkarm
94 Schwenkgelenk
95 Endbereich
96 Durchbruch
97 Kopplungselement
100 Anlageflächenelement
101 Anlageflächenbereich
102 Haftoberfläche
103 U-Schenkel
104 U-Steg
ME mobiles Endgerät / Tablet
SW Schließwerkzeug
S2 Schwenkachse
S1 Drehachse
ZA zentrale Achse
R Schlüssel-Rotationsachse
B Bewegungsrichtung
L Längsrichtung
a Höhe
b Breite
d Dicke
e Breite
k Krallenüberstand
I Blockierstellung
II Öffnungsstellung

## Patentansprüche

1. Halter (1) zur Halterung eines mobilen Endgeräts (ME) mit einer Klemmeinrichtung (2) mit zwei an einem Führungsschlitten (3) in einer Längsrichtung (L) gegeneinander verschiebbar gelagerten Backen (4, 5),
welche über einen Bewegungsmechanismus (6) so miteinander gekoppelt sind, dass bei einer Bewegung einer der Backen (4, 5) relativ zum Führungsschlitten (3) die gegenüberliegende Backe synchron relativ zum Führungsschlitten (3) mitbewegt wird,
wobei die Klemmeinrichtung (2) eine Schließeinrichtung (10) mit
- einem verstellbaren Blockierelement (11) aufweist, welches in einer Blockierstellung (I) den Bewegungsmechanismus (6) blockiert, und wobei die Schließeinrichtung (10) **dadurch gekennzeichnet ist, dass** sie
- einen Schließmechanismus (13) mit einer Schließwerkzeugaufnahme (18) aufweist, um das Blockierelement (11) mittels eines in der Schließwerkzeugaufnahme (18) aufgenommenen separaten, ab- und mitnehmbaren Schließwerkzeugs (SW) aus der oder in die Blockierstellung (I) zu bewegen.

2. Halter nach Anspruch 1, wobei die Schließeinrichtung (10) so ausgebildet ist, dass das Blockierelement (11) in der Blockierstellung (I) in zumindest ein bewegliches Element (7) des Bewegungsmechanismus (6) eingreift.

3. Halter nach Anspruch 2, wobei der Bewegungsmechanismus (6) zumindest ein Verzahnungselement (7, 41) umfasst und wobei die Schließeinrichtung (10) so ausgebildet ist, dass das Blockierelement (11) in der Blockierstellung (I) in das Verzahnungselement (7, 41) eingreift.

4. Halter nach Anspruch 3, wobei der Bewegungsmechanismus (6) als Verzahnungselemente (7, 41) zumindest zwei Zahnstangen (41), die jeweils einer der Backen (4, 5) zugeordnet sind, und zumindest ein Zahnrad (7) aufweist, über welches die Zahnstangen (41) miteinander gekoppelt sind, und
wobei die Schließeinrichtung (10) so ausgebildet ist, dass das Blockierelement (11) in der Blockierstellung (I) in das Zahnrad (7) und/oder eines der Zahnstangenelemente (41) eingreift.

5. Halter nach einem der vorstehenden Ansprüche, wobei das Blockierelement (11) in einer Blockierelement-Führung (65) beweglich, vorzugsweise linear verschiebbar, gelagert ist.

6. Halter nach einem der vorstehenden Ansprüche, wobei der Schließmechanismus (13) ein Getriebe (20), vorzugsweise ein Schraubgetriebe (20), umfasst, um das Blockierelement (11) aus der oder in die Blockierstellung (7) zu bewegen, wenn ein in der Schließwerkzeugaufnahme (18) aufgenommenes Schließwerkzeug (SW) um eine Rotationsachse (R) gedreht wird.

7. Halter nach einem der vorstehenden Ansprüche, wobei der Schließmechanismus (13) eine mit dem Blockierelement (11) gekoppelte Treibstange (19) aufweist, welche mittels des Schließwerkzeugs (SW) so verstellbar ist, dass das Blockierelement (11) aus oder in die Blockierstellung (I) bewegt wird.

8. Halter nach Anspruch 7, wobei die Treibstange (19) als Gewindespindel ausgebildet ist und zumindest einen Gewindeabschnitt (14) umfasst, mit welchem sie in einer Spindelmutter (17) gelagert ist.

9. Halter nach einem der vorstehenden Ansprüche, wobei die Schließwerkzeugaufnahme (18) im Inneren eines Gehäuses (30, 40) des Tablet-Halters, vorzugsweise in einem Gehäuse (30) des Führungsschlittens (3), angeordnet ist und durch einen zur Außenseite des Gehäuses (30, 40) führenden Kanal (67, 53) zugänglich ist.

10. Halter nach einem der vorstehenden Ansprüche, mit zumindest einem Rückstellelement (54), vorzugsweise einer Druckfeder (54), welche die Backen (4, 5) aufeinander zu bewegt.

11. Halter nach einem der vorstehenden Ansprüche, wobei die Backen (4, 5) Krallen (47) umfassen, welche ein zu haltendes mobiles Endgerät (ME) an zwei einander gegenüberliegenden Kanten umgreifen, wobei ein Krallenüberstand (k) vorzugsweise mindestens 5 mm, besonders bevorzugt mindestens 6 mm beträgt.

12. Halter nach einem der vorstehenden Ansprüche, wobei zumindest eine Auflagefläche (8), an welcher ein zu haltendes mobiles Endgerät (ME) mit seiner Rückseite anliegt, vorzugsweise an zumindest einer der Backen (4, 5), und/oder zumindest eine Innenseite von Krallen (47), welche ein zu haltendes mobiles Endgerät (ME) an zwei sich gegenüberliegenden Kanten umgreifen, mit einer rutschhemmenden, vorzugsweise haftenden, Oberfläche versehen sind.

13. Halter nach Anspruch 12, wobei die Auflagefläche (8) der Backe (4, 5) und/oder die Innenseiten der Krallen (47) jeweils mit einer gummielastischen Oberfläche versehen sind.

14. Halter nach einem der Ansprüche 12 oder 13, mit einem Auflageflächenbereich (101), an welchem ein zu haltendes mobiles Endgerät (ME) mit seiner Rückseite anliegt, der mit einer Haftoberfläche (102) ausgestattet ist.

15. Halter nach Anspruch 14, wobei die Haftoberfläche (102) an einem separaten Anlageflächenelement (100) angeordnet ist, welches zwischen den Backen (4, 5) mit einer Führungsschiene des Führungsschlitten (3) koppelbar ist.

## Claims

1. A holder (1) for holding a mobile device (ME), with a clamping device (2) with two jaws (4, 5) mounted on a guide carriage (3) so as to be displaceable relative to one another in a longitudinal direction (L),
which are coupled to one another via a movement mechanism (6) in such a manner that when one of the jaws (4, 5) is moved relative to the guide carriage (3), the opposite jaw is synchronously moved along relative to the guide carriage (3), wherein the clamping device (2) comprises a locking device (10) with
- an adjustable blocking element (11) which, in a blocking position (I), blocks the movement mechanism (6), and wherein the locking device (10) is **characterized in that**
- it comprises a locking mechanism (13) with a locking tool receptacle (18) in order to move the blocking element (11) out of or into the blocking position (I) by means of a separate locking tool (SW) which is accommodated in the locking tool receptacle (18) and can be removed and taken along.

2. The holder according to claim 1, wherein the locking device (10) is designed such that in the blocking position (I), the blocking element (11) engages in at least one movable element (7) of the movement mechanism (6).

3. The holder according to claim 2, wherein the movement mechanism (6) comprises at least one toothed element (7, 41) and wherein the locking device (10) is designed such that in the blocking position (I), the blocking element (11) engages in the toothed element (7, 41).

4. The holder according to claim 3, wherein the movement mechanism (6) has at least two toothed racks (41) as toothed elements (7, 41) which are each associated with one of the jaws (4, 5), and at least one gear wheel (7), via which the toothed racks (41) are coupled to one another, and
wherein the locking device (10) is designed in such a manner that in the blocking position (I), the blocking element (11) engages in the gear wheel (7) and/or one of the toothed rack elements (41).

5. The holder according to any one of the preceding claims, wherein the blocking element (11) is mounted in a blocking element guide (65) so as to be movable, preferably linearly displaceable.

6. The holder according to any one of the preceding claims, wherein the locking mechanism (13) comprises a gear (20), preferably a screw gear (20), for moving the blocking element (11) out of or into the blocking position (7) when a locking tool (SW) accommodated in the locking tool receptacle (18) is rotated about an axis of rotation (R).

7. The holder according to any one of the preceding claims, wherein the locking mechanism (13) comprises a drive rod (19) which is coupled to the blocking element (11) and which is adjustable by means of the locking tool (SW) such that the blocking element (11) is moved out of or into the blocking position (I).

8. The holder according to claim 7, wherein the drive rod (19) is designed as a threaded spindle and comprises at least one threaded section (14) with which it is mounted in a spindle nut (17).

9. The holder according to any one of the preceding claims, wherein the locking tool receptacle (18) is arranged inside a housing (30, 40) of the tablet holder, preferably in a housing (30) of the guide carriage (3), and is accessible through a channel (67, 53) leading to the outside of the housing (30, 40).

10. The holder according to any one of the preceding claims, with at least one restoring element (54), preferably a compression spring (54), which moves the jaws (4, 5) towards each other.

11. The holder according to any one of the preceding claims, wherein the jaws (4, 5) comprise claws (47) which, at two edges located opposite each other, engage around a mobile device (ME) to be held, wherein a claw projection (k) is preferably at least 5 mm, particularly preferably at least 6 mm.

12. The holder according to any one of the preceding claims, wherein at least one support surface (8), against which a mobile device (ME) to be held rests with its rear side, preferably against at least one of the jaws (4, 5), and/or at least one inner side of claws (47) which, at two edges located opposite each other, engage around a mobile device (ME) to be held, are provided with a non-slip, preferably adhesive, surface.

13. The holder according to claim 12, wherein the support surface (8) of the jaw (4, 5) and/or the inner sides of the claws (47) are each provided with a rubber-elastic surface.

14. The holder according to any one of claims 12 or 13, with a support surface area (101) against which a mobile device (ME) to be held rests with its rear side and which is provided with an adhesive surface (102).

15. The holder according to claim 14, wherein the adhesive surface (102) is arranged on a separate contact surface element (100) which can be coupled between the jaws (4, 5) to a guide rail of the guide carriage (3).

## Revendications

1. Support (1) pour maintenir un terminal mobile (ME) avec un dispositif de serrage (2) avec deux mâchoires (4, 5) logées de façon mobile l'une contre l'autre sur une glissière de guidage (3) dans une direction longitudinale (L),
lesquelles sont couplées l'une à l'autre par un mécanisme de déplacement (6) de telle manière que lors d'un déplacement d'une des mâchoires (4, 5) par rapport à la glissière de guidage (3), la mâchoire opposée est entraînée conjointement de façon synchronisée par rapport à la glissière de guidage (3),
sachant que le dispositif de serrage (2) comporte un système de fermeture (10) avec
- un élément de blocage réglable (11), lequel bloque dans une position de blocage (I) le mécanisme de déplacement (6) et sachant que le système de fermeture (10) est **caractérisé en ce qu'**
- il comporte un mécanisme de fermeture (13) avec un logement d'outil de fermeture (18) pour déplacer de ou dans la position de blocage (I) l'élément de blocage (11) au moyen d'un outil de fermeture (SW) pouvant être enlevé et entraîné, séparé logé dans le logement d'outil de fermeture (18).

2. Support selon la revendication 1, sachant que le système de fermeture (10) est constitué de telle manière que l'élément de blocage (11) vient en prise dans la position de blocage (I) dans au moins un élément mobile (7) du mécanisme de déplacement (6).

3. Support selon la revendication 2, sachant que le mécanisme de déplacement (6) comprend au moins un élément à denture (7, 41) et sachant que le système de fermeture (10) est constitué de telle manière que l'élément de blocage (11) vient en prise dans la position de blocage (I) dans l'élément à denture (7, 41).

4. Support selon la revendication 3, sachant que le mécanisme de déplacement (6) comporte au moins deux barres dentées (41), qui sont respectivement attribuées à une des mâchoires (4, 5) et au moins un engrenage (7) par le biais duquel les barres dentées (41) en tant qu'élément à denture (7, 41) sont couplées l'une à l'autre et
sachant que le système de fermeture (10) est constitué de telle manière que l'élément de blocage (11) vient en prise dans la position de blocage (I) dans l'engrenage (7) et/ou un des éléments de barre dentée (41).

5. Support selon l'une quelconque des revendications précédentes, sachant que l'élément de blocage (11) est logé mobile, de préférence déplaçable de façon linéaire, dans un guidage d'élément de blocage (65).

6. Support selon l'une quelconque des revendications précédentes, sachant que le mécanisme de fermeture (13) comprend une transmission (20), de préférence une transmission à vis (20) pour déplacer l'élément de blocage (11) de ou dans la position de blocage (7), lorsqu'un outil de fermeture (SW) logé dans le logement d'outil de fermeture (18) est tourné autour d'un axe de rotation (R).

7. Support selon l'une quelconque des revendications précédentes, sachant que le mécanisme de fermeture (13) comporte une tige d'entraînement (19) couplée à l'élément de blocage (11), laquelle peut être déplacée au moyen de l'outil de fermeture (SW) de telle manière que l'élément de blocage (11) est déplacé de ou dans la position de blocage (I).

8. Support selon la revendication 7, sachant que la tige d'entraînement (19) est constituée comme une broche filetée et comprend au moins une section filetée (14) avec laquelle elle est logée dans un écrou de broche (17).

9. Support selon l'une quelconque des revendications précédentes, sachant que le logement d'outil de fermeture (18) est disposé à l'intérieur d'un boîtier (30, 40) du support de tablette, de préférence dans un boîtier (30) de la glissière de guidage (3) et est accessible par un conduit (67, 53) menant à la face extérieure du boîtier (30, 40).

10. Support selon l'une quelconque des revendications précédentes, avec au moins un élément de rappel (54), de préférence un ressort de pression (54), lequel déplace les mâchoires (4, 5) l'une sur l'autre.

11. Support selon l'une quelconque des revendications précédentes, sachant que les mâchoires (4, 5) comprennent des pinces (47), lesquelles saisissent un terminal mobile (EM) à supporter aux deux bords opposés l'un à l'autre, sachant qu'une saillie de pince (k) est d'au moins 5 mm, en particulier de préférence d'au moins 6 mm.

12. Support selon l'une quelconque des revendications précédentes, sachant qu'au moins une surface d'appui (8), sur laquelle vient s'appliquer avec sa face arrière un terminal mobile (EM) à supporter, de préférence sur au moins une des mâchoires (4, 5), et/ou au moins une face intérieure des pinces (47), lesquelles saisissent un terminal mobile (EM) à supporter aux deux bords opposés, sont munies d'une surface antidérapante, de préférence adhérante.

13. Support selon la revendication 12, sachant que la surface d'appui (8) de la mâchoire (4, 5) et/ou les côtés intérieurs des pinces (47) sont dotés respectivement d'une surface élastique en caoutchouc.

14. Support selon l'une quelconque des revendications 12 ou 13, avec une zone de surface d'appui (101) sur laquelle vient s'appliquer avec sa face arrière un terminal mobile (ME) à supporter, qui est équipée d'une surface d'adhérence (102).

15. Support selon la revendication 14, sachant que la surface d'adhérence (102) est disposée sur un élément de surface d'appui (100) séparé, lequel peut être couplé entre les mâchoires (4, 5) à un rail de guidage de la glissière de guidage (3).
